# EUROPÄISCHE PATENTSCHRIFT

(11) **EP 0 834 459 B1**
(45) Veröffentlichungstag und Bekanntmachung des Hinweises auf die Patenterteilung: **27.08.2003**
(21) Anmeldenummer: 97115297.0
(22) Anmeldetag: 04.09.1997
(51) Int. Cl.: B65G 63/00, B65G 1/04, B61F 13/00, E04H 6/36

(54) **Containertransportsystem mit Schienen**
Container transport system with rails
Système de transport de conteneurs équipé de rails

(30) Priorität: 06.03.1997 DE 19709034; 04.10.1996 DE 19641043
(43) Veröffentlichungstag der Anmeldung: 08.04.1998
(73) Patentinhaber: Noell Crane Systems GmbH, 97080 Würzburg (DE)
(72) Erfinder: Bauer, Reinhard, 97261 Güntersleben (DE); Huth, Edgard, 97225 Zellingen (DE); Häfel, Walter, 97222 Rimpar (DE); Weis, Otto, 97241 Oberpleichfeld (DE)
(74) Vertreter: Lüdtke, Frank

(56) Entgegenhaltungen:
- DE-A- 3 205 961
- DE-A- 4 407 999
- DE-A- 19 503 878
- DE-C- 4 439 740
- FR-A- 2 174 163

## Beschreibung

Die Erfindung betrifft ein Containertransportsystem mit Schienen auf Fahrbahn, Linearmotor und drehbaren Rädern.

Die Erfindung ist überall dort anwendbar, wo Container mit schienengeführten linearmotorgetriebenen Transportwagen voll automatisch bewegt werden. Die Erfindung ist für den Transport in Längs- und Querrichtung auf einem vorgegebenen ebenen Gelände geeignet, wo umweltfreundlich, ohne nennenswerte Wartung, ein schnelles Verfahren von Container in Längsund Querrichtung erforderlich ist, beispielsweise auf Sortierplätzen in Endladeeinrichtungen in Häfen oder aber zwischen Schiffen und Straßenoder Schienenfahrzeugen oder eine dieser genannten Fahrzeugarten untereinander.

Für den Transport von Containem auf einem flachen Gelände sind Vorrichtungen bekannt. So wird beispielsweise in DE 44 07 999 A1 ein Fahrwerk für weichenlose beliebige Richtungsänderungen beschrieben, das für den Einsatz in automatischen Parkhäusern geeignet ist und mit dem, mittels Linearantriebstechnik, Paletten, auf denen Lasten stehen, auf Führungsprofilen in verschiedene Richtungen längs und quer transportiert werden. Die Vorrichtung hat den Nachteil, daß schwenkbare Tragrollen, die an den Ecken der Paletten angeordnet sind, für sehr hohe Lasten, wie sie in Containern transportiert werden, nicht geeignet sind, da der Energiebedarf zum Schwenken der Rollen sehr hoch ist. Weiterhin ist eine hohe Fahrbahnbreite für das Umschlagen der Rollen bei Fahren in entgegengesetzte Richtung erforderlich.

Weiterhin schlägt DE 195 03 878 A1 eine Vorrichtung für weichenlose Richtungsänderungen vor, bei der schwenkbare Tragrollen, die von einem einzigen Führungselement umgeben werden, an Paletten angeordnet sind, mit denen Container transportiert werden können. Auch in diesem Beispiel handelt es sich um eine Vorrichtung, bei der Paletten mittels Schwenkrollen an allen vier Ecken linearmotorgetrieben bewegt werden, ohne daß die o.g. Nachteile des Standes der Technik beidseitig werden.

Aus FR-A 2 174 163 ist ein Containertransportsystem mit Schienen auf Fahrbahnen, Linearmotor und drehbaren Rädern mit einem System von quer im Winkel und parallel zueinander angeordneten Fahrbahnen mit Schienen bekannte Kreuzungspunkte bilden, wobei die Schienen nur außerhalb der Kreuzungspunkte angeordnet sind und Transportwagen mit um einen Drehzapfen drehbare Räder mit horizontalen Führungsrollen, wobei die Abstände der Räder mit den Abständen der Schienen übereinstimmen und die Räder mit den Führungsrollen in den Kreuzungspunkten drehbar sind. In Längs- und Querrichtung am Transportwagen sind Magnete angeordnet, die mit den Statoren der Fahrbahn, den Transportwagen in Längs- und Querrichtung bewegbar sind.

Weiterhin ist ein Gestänge mit Gelenkhebeln und einem Schiebewagen zum Drehen der horizontalen Führungsrollen vorhanden. Bei den Rädern handelt es sich allerdings um Räder in Form von einfachen Scheiben, die über Schwenkhebel bewegt werden.

Es ist daher Aufgabe der Erfindung ein Transportsystem für Container zu entwickeln, mit dem hohe Lasten mit schmalen Fahrbahnen und bei geringem energetischen und apparativen Aufwand mit Linearmotoren störungsfrei in Längs- und in Querrichtung verfahrbar sind.

Diese Aufgabe wird nach dem kennzeichnenden Teil des ersten Patentanspruches gelöst.

Die Unteransprüche geben vorteilhafte Ausführungen der Erfindung wieder.

Die erfindungsgemäße Lösung sieht ein Containertransportsystem mit Fahrbahnen, Linearmotoren und drehbaren Doppelscheibenrädem vor, wobei die Fahrbahnen parallel und quer zueinander angeordnet sind und Kreuzungspunkte bilden, wobei außerhalb der Kreuzungspunkte mittig in den Fahrbahnen Führungsschienen angeordnet sind.

Die Fahrbahnen sind als Schienen ausgeführt, auf denen der Transportwagen für Container mit den Laufflächen der jeweils mittleren Laufräder entlangfährt.

Die Laufräder sind als Doppelscheibenräder ausgebildet, die ihrerseits auf Laufflächen abrollen.

Die drehbaren Laufrollen sind von horizontalen Führungsrollen umgeben, wobei die Abstände der Laufrollen mit den Abständen der Fahrbahnen übereinstimmen und die Laufrollen, mit den sie umgebenden Führungsrollen, in den Kreuzungspunkten drehbar sind. Die horizontalen Führungsrollen liegen beim Fahren auf geraden Strecken an den Führungsschienen an und bewirken somit, daß nur die mittleren sowie der mittlere Teil der Laufrollen mit den Führungsschienen in Berührung kommen, so daß ein freier Lauf der seitlichen oder des seitlichen Teiles der Laufrollen gewährleistet ist.

In Längs- und Querrichtung zu den Transportwagen sind neben den Fahrbahnen Statoren angeordnet, die mit Magneten, die längs und quer am Transportwagen angeordnet sind, in Wechselwirkung stehen und für eine Vorwärtsbewegung des Transportwagens in Längs- und Querrichtung sorgen. Weiterhin sind parallel zu den Fahrbahnen Statoren angeordnet, die auf an den Transportwagen angeordnete Schwenkschieber wirken. Das Verstellen der Schwenkschieber am Transportwagen bewirkt über Gestänge und Schwenkgestänge, daß die Laufrollen in den Kreuzungspunkten um jeweils 90° gedreht werden und somit eine Richtungsänderung des Wagens möglich wird.

Für eine sichere Funktion der Vorrichtung genügt es, wenn nur um drei Laufrollenpaare horizontale Führungsrollen angeordnet sind.

Sobald der linearmotorbetriebene Transportwagen einen Kreuzungspunkt erreicht, was durch flächendeckend angeordnete Sensoren angezeigt wird, wird der Transportwagen durch mit wenig strombetriebene Statoren in Längs- und Querrichtung im Kreuzungspunkt gehalten, wobei Statoren für die Schwenkschieber die Schwenkschieber betätigen. Die von den Schwenkschiebern ausgehenden Gestänge mit Schwenkgestängen betätigen über jeweils einen Schwenkschieber jeweils zwei Doppelscheibenräderpaare, die sich in den Kreuzungspunkten drehen. Der Transportwagen wird von den Statoren solange im Kreuzungspunkt gehalten, bis die Laufrollen um 90° gedreht sind. Danach kann der Transportwagen mittels Statoren, quer zu seiner Längsrichtung fahrend, die Kreuzungspunkte verlassen.

Für den Fall, daß ein Transportwagen sicher im Transportcontainersystem abgestellt werden soll, erfolgt das, indem alle Doppelscheibenräder im Kreuzungspunkt um nur 45° gedreht werden, so daß ein unbeabsichtigtes Verfahren des Transportwagens nicht möglich ist.

Vorteilhaft ist es, als Sensoren zur Steuerung der Transportwagen Sensoren anzuwenden, wobei für eine einwandfreie Funktion des Systems in jeder Stellung des Transportwagens mindestens ein Sensor unter dem Transportwagen zwischen den Führungsschienen angeordnet sein müssen. Durch die Führung der Laufräder mittels Gestänge wird erreicht, daß sich alle vier Laufräderpaare am Transportwagen gleichzeitig und gleichmäßig verdrehen, ohne daß es zu einem Nachlaufen der Räder kommt. Weiterhin sind mit dem vorgeschlagenen Containertransportsystem Container mit sehr hohen Lasten bei nur geringer Breite der Fahrbahnen verfahrbar.

Vorteilhaft ist es, den Transportwagen als Doppelpalette auszuführen und auf dem Transportwagen Dämpfungsvorrichtungen, beispielsweise Federn, Gummis, Stoßdämpfer oder andere federnde Vorrichtungen vorzusehen, die beim Absetzen der Container mit dem Kran verhindern, daß bei einem schnellen Absetzen der Container Deformierungen am Transportwagen auftreten, die Betriebsunsicherheiten im Linearmotorsystem mit sich bringen können.

Es ist weiterhin vorteilhaft, die Fahrbahnen im Baukastensystem auszuführen, ergänzen und zu erweitern.

Im folgenden wird die Erfindung an 16 Figuren und einem Ausführungsbeispiel dargestellt.

Im folgenden wird die Erfindung an sechs Figuren und einem Ausführungsbeispiel näher erläutert.

Die Figuren zeigen:
- Fig. 1: Querschnitt des Fahrschienenaufbaus und des Transportwagens,

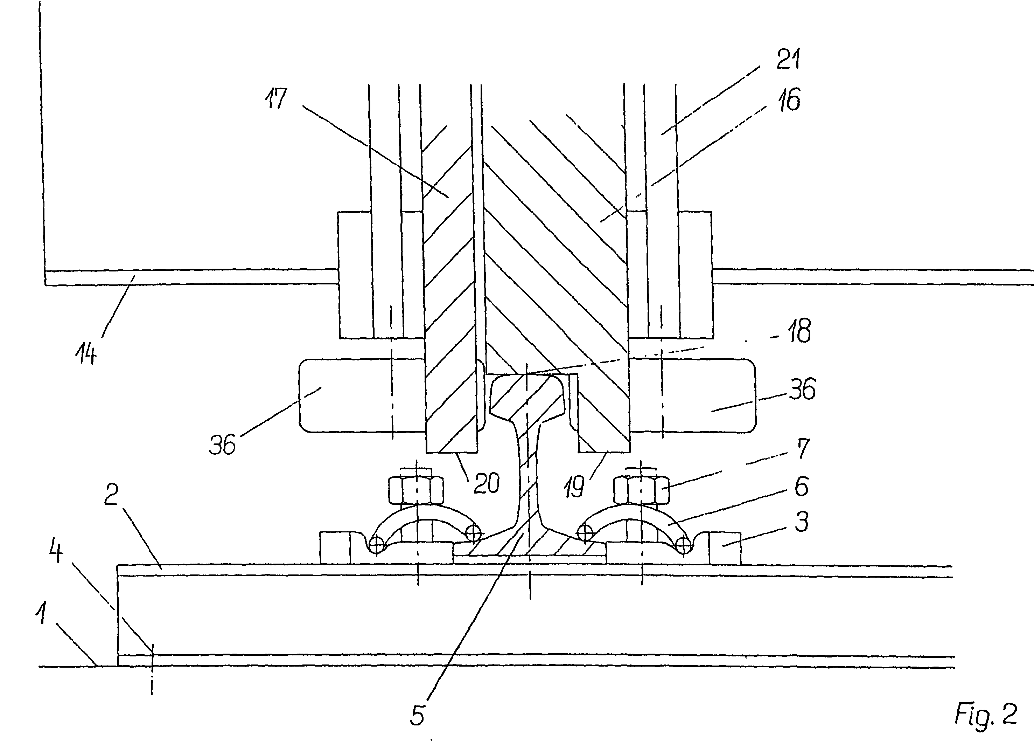

- Fig. 2: Schienenaufbau mit den Transportwagenrädern,

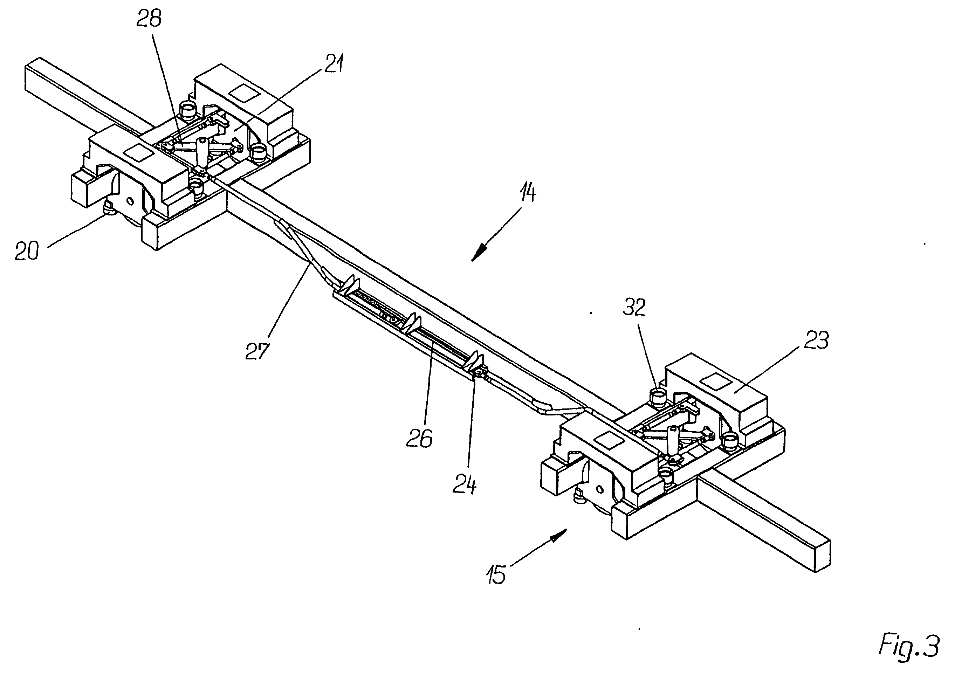

- Fig. 3: Isometrische Darstellung des Unterwagens mit Schwenkeinrichtung, Traverse und Radgehäuse,

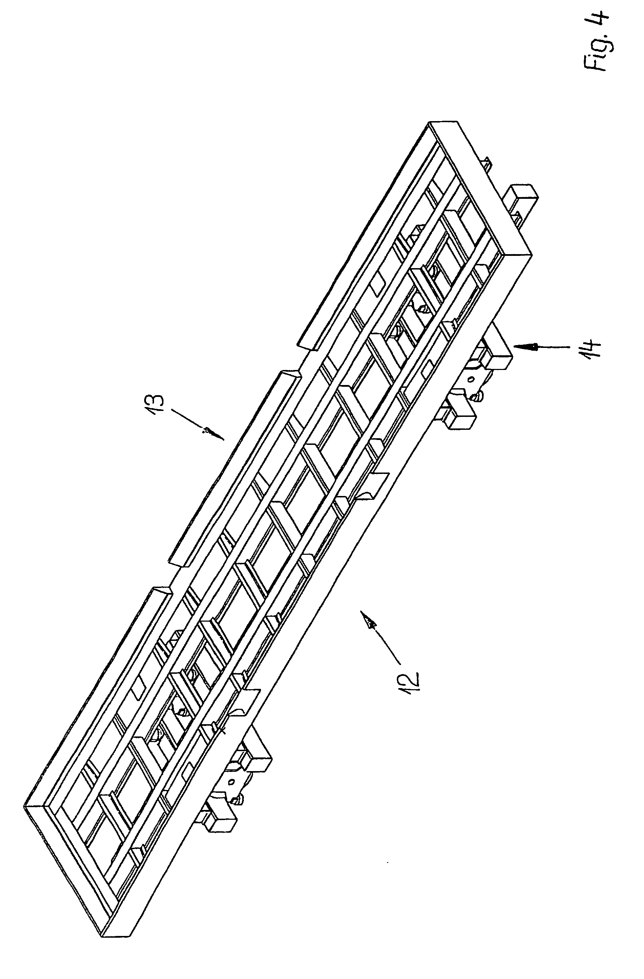

- Fig.4: Isometrische Darstellung des Transportweges mit Oberwagen und Unterwagen,

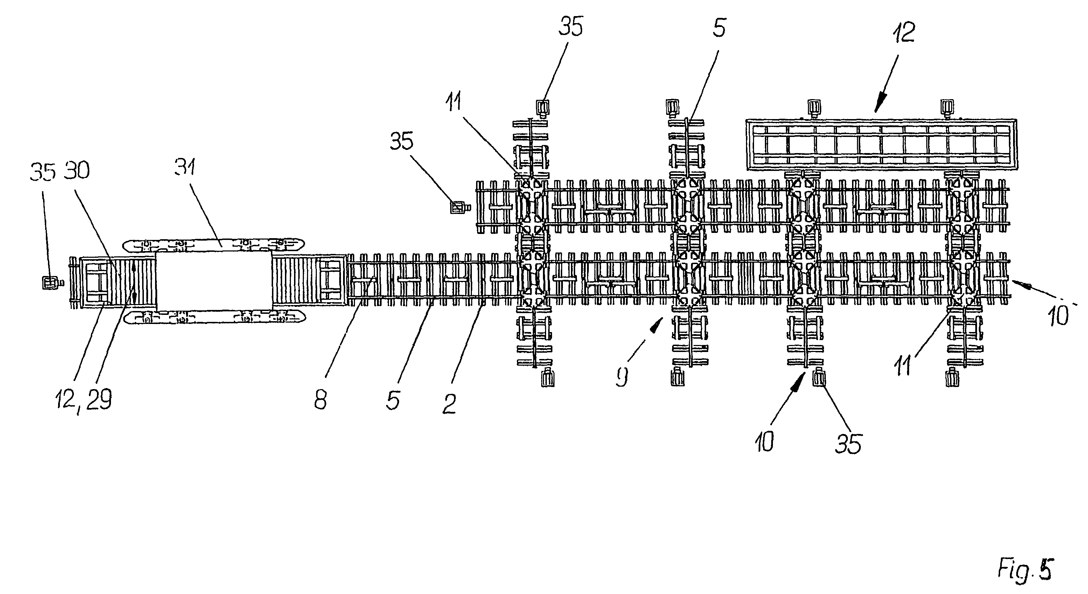

- Fig. 5: Draufsicht auf einen Teilbereich der Fahrstrecke mit Längs- und Querschienen, Stahlschwellen, Schwenkteller und Puffer sowie eine Übergabestelle mit Transportwagen und einem Straddle Carrier,
- Fig. 6: Darstellung von zwei drehbaren Räderpaaren mit Führungsrollen eines Radpaares auf Fahrbahnen mit Führungsschiene,
- Fig. 7: Transportwagen im Kreuzungsbereich, Beginn des Schwenkens der Räder,
- Fig. 8: Stator-Bestromung zu Fig. 7,
- Fig. 9: Transportwagen im Kreuzungsbereich mit geschwenkten Laufrädem im Kreuzungspunkt,
- Fig. 10: Stator-Bestromung zu Fig. 9.

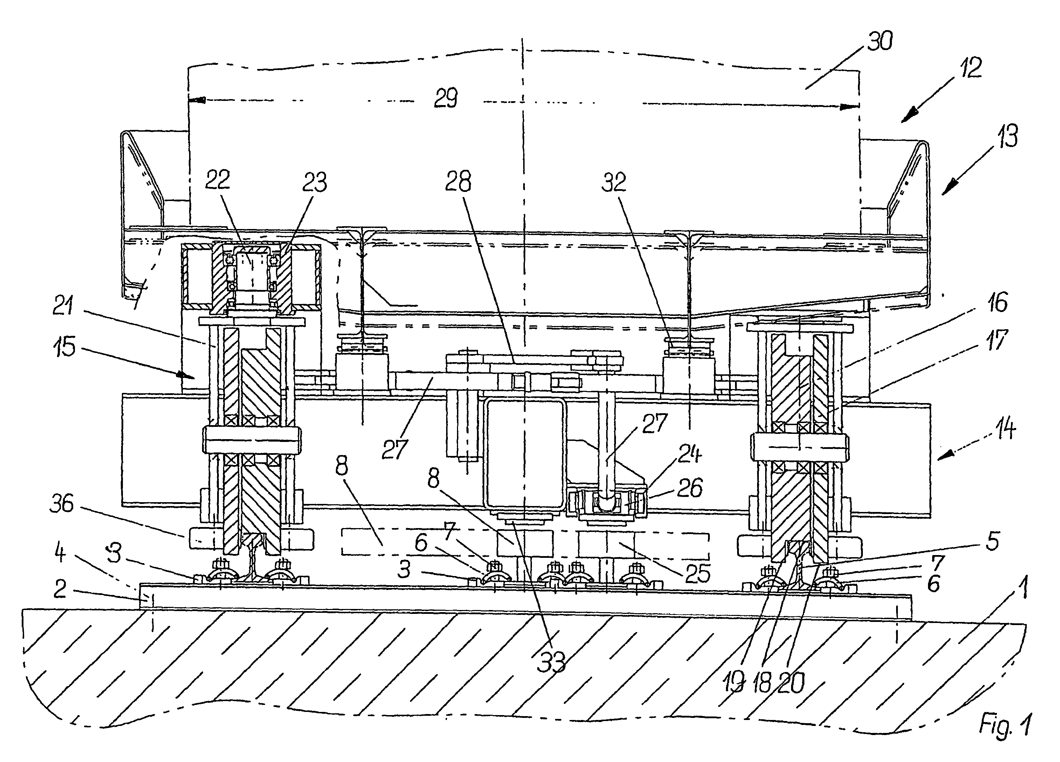

Der in Fig. 1 dargestellte Querschnitt des Fahrschienenaufbaus zeigt einevorbereitete ebene Fläche 1, bestehend aus Beton, Bitumen oder Schotter, auf der der Belastung entsprechend im Abstand Stahlschwellen 2 mit Schienenhalteteile 3 verlegt und mit Befestigungsmittel 4 befestigt wurden. in die Schienenhalteteile wurden die Schienen 5 eingesetzt und über Federelement 6 und Schrauben 7 gehalten. Mit gleichem Aufbau Schienenhalteteil 3, Federelement 6 und Schrauben 7 sind die Linearmotorstatoren 8 und 25 auf den Stahlschwellen 2 befestigt. Durch diesen Aufbau können die Statoren 8 und 25 entsprechend ihrer magnetischen Zuordnung in der Längsrichtung stufenlos verschoben werden.

Im Kreuzungsbereich 9 der Fahrbahn 10 sind auf den Stahlschwellen 2 Formteller 11 aufgesetzt und mit Schrauben 7 befestigt. Zur stoßfreien Überfahrt von der Schiene 5 auf den Formteller 11 sind angeschrägte Schienenendstücke 34 am Formteller 11 vorhanden.

Auf den Schienen wird der Transportwagen 12 für Container 30, bestehend aus dem verformungszulässigen Oberwagen 13 und der mit mehreren Dämpfungselementen 32 für die Magnete 33 steife Unterwagen 14 mit den drehbaren Rädern 15 aufgesetzt. Die drehbaren Räder 15 sind als Doppelscheibenräder 16 und 17 ausgebildet, wobei das Scheibenrad 16 mit den Läufflächen 18 für die Schiene 5 und die Lauffläche 19 für den Formteller 11 ausgebildet ist. Dagegen kommt die Lauffläche 20 der Scheibenräder 17 nur auf dem Formteller 11 zum Einsatz. Die seitliche Führung der drehbaren Räder 15 sind über das Radgehäuse 21 und den Drehzapfen 22 in einer Traverse 23 gelagert. Die Traverse 23 ist mit dem Unterwagen 14 kraftschlüssig verbunden.

Die Bewegung der drehbaren Räder 15 erfolgt über ein in einem U-Profil 24 vom Stator 25 bewegten Verschiebewagen 26 und weiter über Gestänge 27 und Gelenkhebel 28 in das Radgehäuse 21. Durch die Lagerung der drehbaren Räder 15 innerhalb der Containerbreite 29 ist eine Übernahme des Containers 30 mit handelsüblichen spreaderbstücktem Containerfahrzeug, z. B. Straddle Carrier 31, möglich.

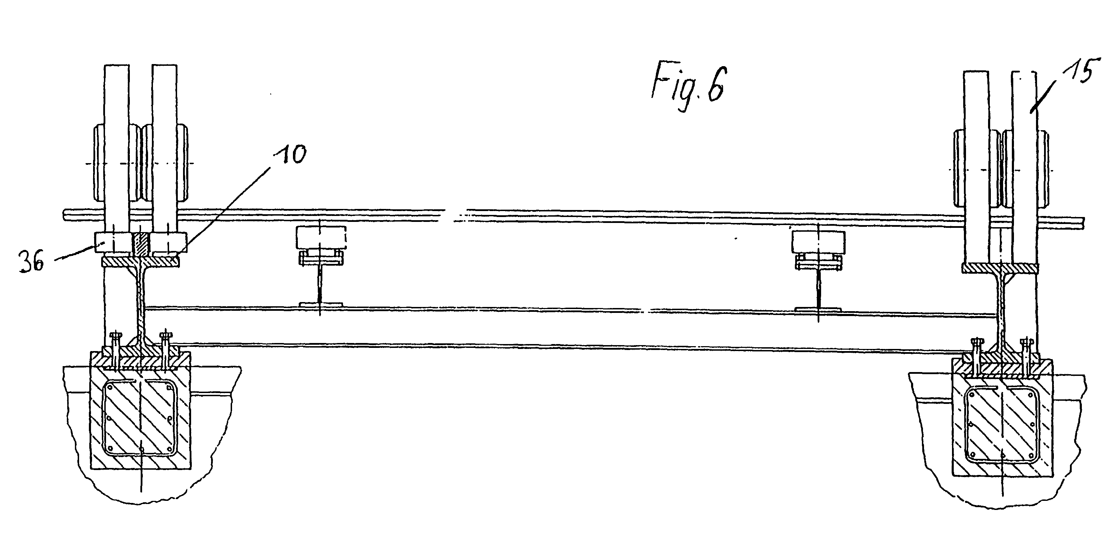

Die Fig. 6 zeigt eine Variante der erfindungsgemäßen Lösung, bei der die Räder 15 auf Fahrbahnen 10 verfahren und mittig mit einer Schiene 5 über horizontale Führungsrollen 36 an der Schiene 5 geführt werden.

Der Transportablauf erfolgt mit der erfindungsgemäßen Vorrichtung in folgender Weise:

Mit einer Containerbrücke (nicht dargestellt) wird der Container 30 auf den Oberwagen 13 des Transportwagens 12 aufgesetzt. Über mehrere Dämpfungselemente 32 wird der Aufsetzstoß gedämpft. Durch die Bestromung der Statoren 8 erfolgt die Fahrbewegung des Transportwagens 12. Nach erreichen und Abbremsen des Transportwagens 12 auf den Formteller 11 wird durch die Bestromung des Stators 25 der Verschiebewagen 26 betätigt und über Gestänge alle Räder 15 geschwenkt. Durch die Bestromung der für die Querfahrt zuständigen Statoren 8 erfolgt die Weiterfahrt. Zur Absicherung der Fahrstrecken sind Endpuffer 35 aufgebaut.

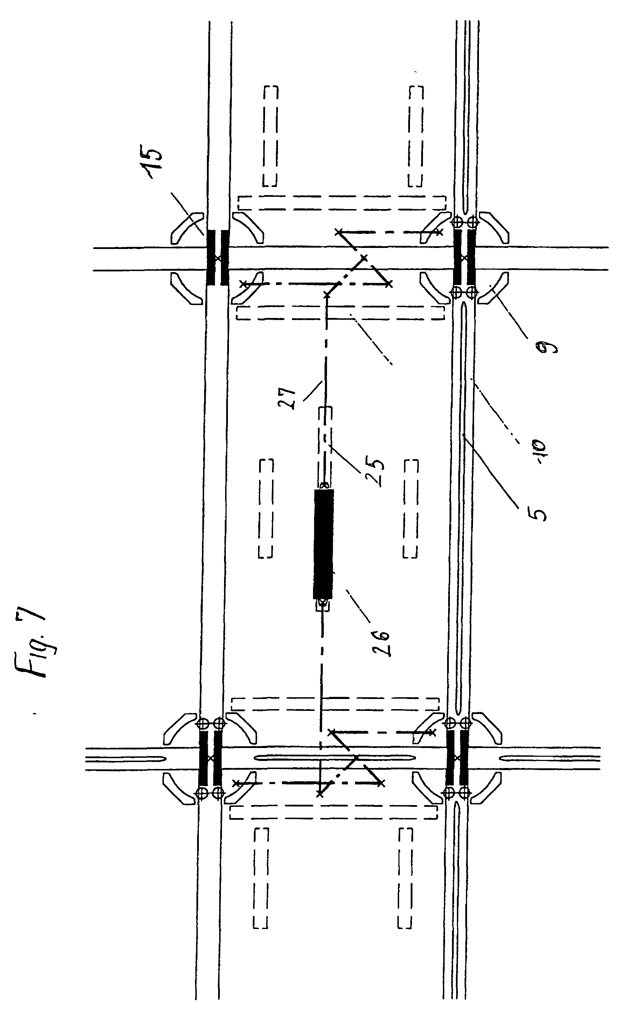

Die folgenden Figuren 7 bis 10 zeigen, wie durch die längs und quer der Schiene 5 angeordneten Permantent-Magnete 33 und den Verschiebewagen 26 am Transportwagen 12 eine Richtungsänderung herbeigeführt wird.

Figur 7 zeigt das erfindungsgemäße Containertransportsystem, bestehend aus Kreuzungspunkten 9, wobei nur jede zweite Fahrbahn eine Schiene 5 aufweist. Diese Schiene 5 ist nur außerhalb der Kreuzungspunkte 9 vohanden, um ein Drehen der Räder 15 nicht zu behindern. Der Transportwagen 12 befindet sich im Kreuzungspunkte 15. Zum Verdrehen der Räder 15 in den Kreuzungspunkten 9 dient ein Verschiebewagen 26, der über Gestänge 27 seine Bewegungen auf die Räder 15 überträgt. Betätigt wird der Verschiebewagen 26 über den Stator 25, der sich längs der Fahrbahn 10 zwischen den Fahrbahnen 10 befindet. Auf den Kreuzungspunkten 9 sind Führungselemente 37 angeordnet, an denen die horizontalen Führungsrollen 36 beim Drehen geführt werden.

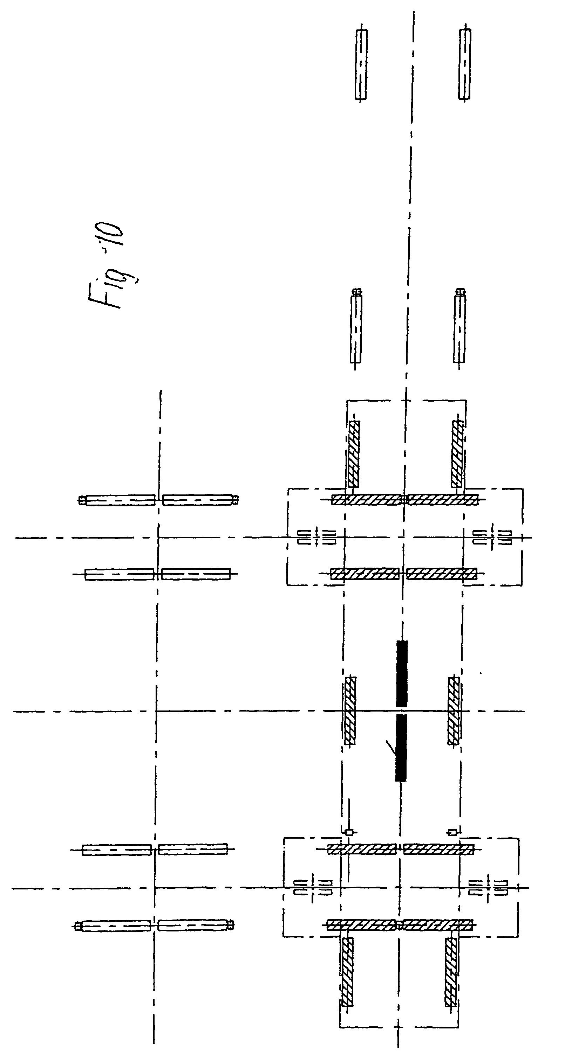

Bei der Anfahrt auf den ersten Kreuzungspunkt 9 sind jeweils einige Statoren 25 längs der Fahrbahn 10 bestromt, die den Transportwagen 12 transportieren. Zur Erkennung des Transportwagens 12 dienen für die Längs- und Querfahrt jeweils Sensoren (Hallsensoren), die so angeordnet sind, daß sich immer ein Sensor unter dem Transportwagen 12 befindet. Diese flächendeckend vorhandenen Sensoren stellen sicher, daß die Statoren 25 immer zum erforderlichen Zeitpunkt ab- und zugeschaltet werden, um die gewünschte Fahrt des Transportwagens 12 durchzuführen. Sobald die Kreuzungspunkte 9 erreicht sind, ist der entsprechende Stator 25 zusätzlich bestromt. Der Transportwagen 12 kommt in den Kreuzungspunkten 9 zum Stehen, so daß ein Drehen aller vier Räder 15 erfolgen kann.
Das Drehen der Räder 15 erfolgt über Gestänge 27 mittels Verschiebewagen 26. Zusätzlich zu den Statoren 25 in Längsrichtung werden die Statoren 25 in Querrichtung bestromt (Figur 10). Der Stator 25 bewirkt eine Betätigung des Verschiebewagens 26 und damit ein Verdrehen der Räder 15 in den Kreuzungspunkten 9. Die Statoren 25 sichern den Transportwagen 12 in seiner Position zum Drehen der Räder 15.
Eine 45°-Position der Räder ist vorteilhafterweise für ein kontrolliertes Parken im Kreuzungspunkt 9 anwendbar.

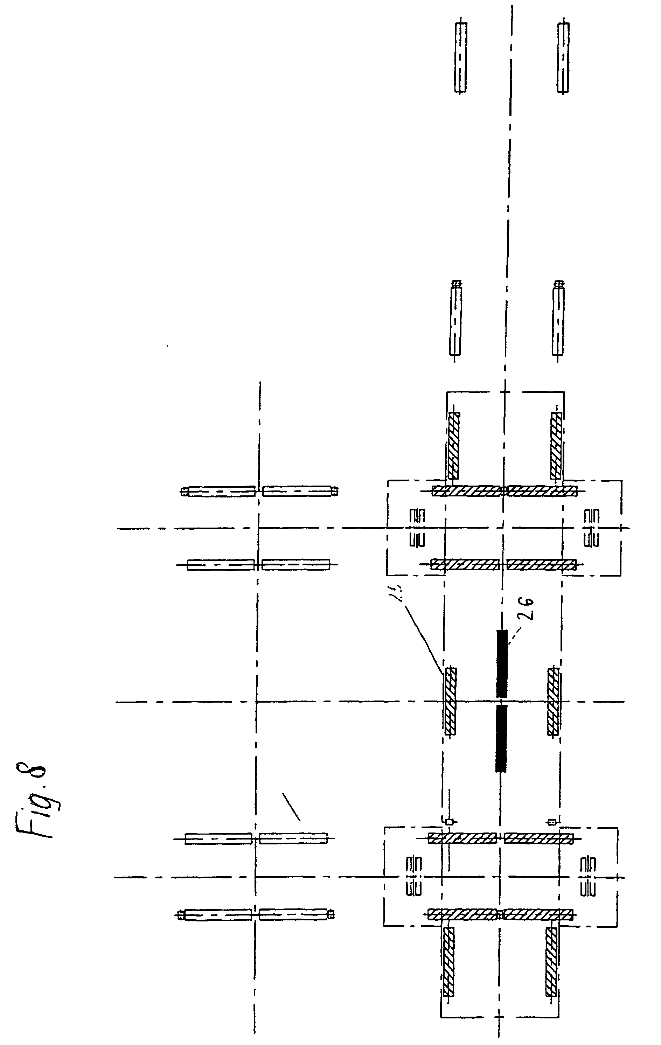

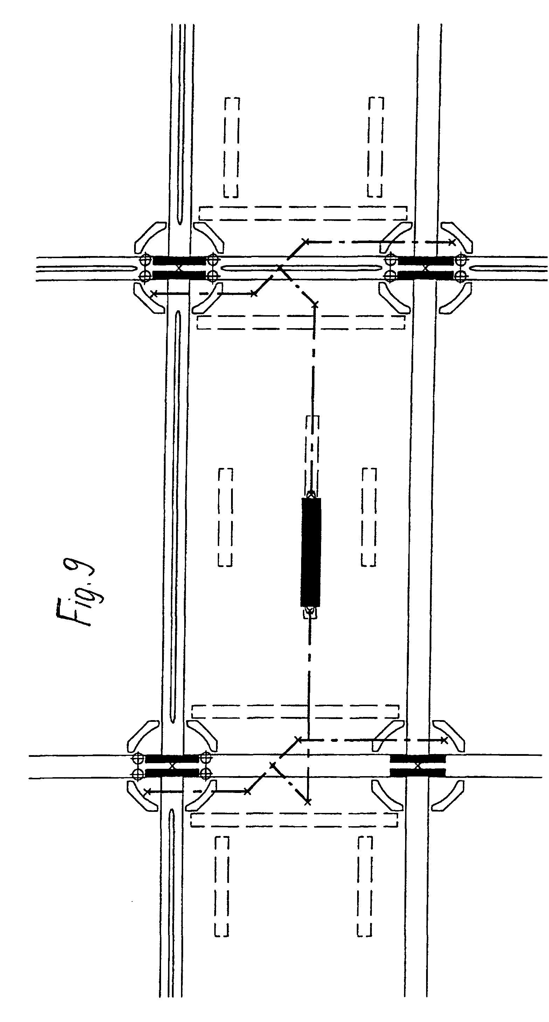

Die Figur 8 zeigt, daß für die Bewegung in Figur 7 alle Statoren 25 bestromt werden müssen. Nachdem die Räderpaare 15 um 90° gedreht wurden, ist die in Figur 9 gezeigte Lage der Räderpaare 15 quer zur Längsrichtung des Transportwagens 12 erreicht. Die bestromten Statoren 25 sind in Figur 10 dargestellt. Danach kann der Transportwagen 12 quer zu seiner Längsrichtung auf den Fahrbahnen 10 verfahren werden. Dazu sind die Statoren 25 quer zum Transportwagen 12 bestromt (nicht dargestellt).

### Liste der verwendeten Bezugszeichen

- 1: = ebene Fläche
- 2: = Schwellen, Stahlschwellen
- 3: = Schienenhalteteile
- 4: = Befestigungsmittel
- 5: = Schiene
- 6: = Federelemente
- 7: = Schrauben
- 8: = Linearstatoren
- 9: = Kreuzungsbereich, Kreuzungsbereich
- 10: = Fahrbahnen
- 11: = Formteller
- 12: = Transportwagen für Container
- 13: = Oberwagen
- 14: = Unterwagen
- 15: = Räder
- 16: = Doppelscheibenräder
- 17: = Doppelscheibenräder
- 18: = Lauffläche der Doppelscheibenräder
- 19: = Lauffläche der Doppelscheibenräder
- 20: = Lauffläche der Doppelscheibenräder
- 21: = Radgehäuse
- 22: = Drehzapfen
- 23: = Traverse
- 24: = U-Profil
- 25: = Stator
- 26: = Verschiebewagen
- 27: = Gestänge
- 28: = Gelenkhebel
- 29: = Containerseite
- 30: = Container
- 31: = Straddle Carrier
- 32: = Dämpfschutz
- 33: = Magnet
- 34: = Schienenendstück
- 35: = Endpuffer
- 36: = Führungsrollen horizontal angeordneter Räder
- 37: = Führungselemente der Kreuzungspunkte

## Patentansprüche

1. Containertransportsystem mit Schienen auf Fahrbahnen, Linearmotor und drehbaren Rädern, mit einem System von quer im rechten Winkel und parallel zueinander angeordneten Fahrbahnen (10) mit Schienen (5), die Kreuzungspunkte (9) bilden, wobei die Schienen (5) nur außerhalb der Kreuzungspunkte (9) angeordnet sind, Transportwagen (12) mit um einen Drehzapfen (22) drehbare Räder (15) mit horizontalen Führungsrollen (36), wobei die Abstände der Räder (15) mit den Abständen der Schienen (5) übereinstimmen und die Räder (15) mit den Führungsrollen (36) in den Kreuzungspunkten (9) drehbar sind, in Längs- und Querrichtung, am Transportwagen (12) angeordnete Magnete (33), die mit Statoren (8,28) der Fahrbahn (10), den Transportwagen (12) in Längs- und Querrichtung bewegen, und ein Gestänge (27) und Gelenkhebel (28) mit einem Verschiebewagen (26) zum Drehen der Räder (15) mit horizontalen Führungsrollen (36), **dadurch gekennzeichnet, dass** die Räder (15) am Transportwagen (12) als Doppelscheibenräder (16, 17) ausgeführt sind

2. Vorrichtung nach Anspruch 1, **dadurch gekennzeichnet, dass** die als Doppelscheibenräder ausgeführten Räder so ausgeführt sind, dass deren mittlere Lauffläche (18) auf der Schiene (5) und deren anderen Laufflächen (19,20) auf den Kreuzungspunkten (9) abrollen.

3. Vorrichtung nach Anspruch 1 oder 2,
**dadurch gekennzeichnet, daß**
parallel zu den Fahrbahnen (10) Statoren (25) für die Verschiebewagen (26) angeordnet sind.

4. Vorrichtung nach den Ansprüchen 1 bis 3,
**dadurch gekennzeichnet, daß**
nur um drei Räder (15, 16, 17) horizontale Führungsrollen (36) angeordnet sind, die in Formtellern (11) geführt werden.

5. Vorrichtung nach einem oder mehreren der Ansprüche 1 bis 4,
**dadurch gekennzeichnet, daß**
jeweils zwei Doppelscheibenräder (16, 17) über einen Verschiebewagen (26) betätigt werden.

6. Vorrichtung nach den Ansprüchen 1 bis 5,
**dadurch gekennzeichnet, daß**
flächendeckend zwischen den Fahrbahnen (10) Sensoren zur Steuerung der Statoren (25) so angeordnet sind, daß sich immer ein Sensor unter dem Transportwagen (12) befindet.

7. Vorrichtung nach den Ansprüchen 1 bis 6,
**dadurch gekennzeichnet, daß**
der Transportwagen (12) aus einem Ober- (13) und einem Unterwagen (14) mit Dämpfungselementen (32) besteht.

## Claims

1. Container-transporting system, having rails on tracks, a linear motor and rotatable wheels, a system of tracks (10), which are disposed transversely at right angles to one another and parallel to one another, said tracks having rails (5) which form the points of intersection (9), the rails (5) only being disposed externally of the points of intersection (9), a transporting carriage (12) having wheels (15), which are rotatable about a pivot spindle (22) and are provided with horizontal guide rollers (36), the spacings between the wheels (15) being identical to the spacings between the rails (5), and the wheels (15) with the guide rollers (36) being rotatable at the points of intersection (9), magnets (33), which are disposed on the transporting carriage (12), when viewed with respect to the longitudinal and transverse directions, and which move the transporting carriage (12) in the longitudinal and transverse directions with stators (8, 25) of the track (10), and a linkage (27) and articulated levers (28) provided with a displacement carriage (26) for rotating the wheels (15) with horizontal guide rollers (36), **characterised in that** the wheels (15) on the transporting carriage (12) are in the form of double-disc wheels (16, 17).

2. Apparatus according to claim 1, **characterised in that** the wheels, which are in the form of double-disc wheels, are so configured that the central running surface (18) of said wheels travels on the rail (5), and the other running surfaces (19, 20) of said wheels travel along the points of intersection (9).

3. Apparatus according to claims 1 or 2, **characterised in that** stators (25) for the displacement carriages (26) are disposed parallel to the tracks (10).

4. Apparatus according to claims 1 to 3, **characterised in that** horizontal guide rollers (36), which are guided in shaped plates (11), are disposed only around three wheels (15, 16, 17).

5. Apparatus according to one or more of claims 1 to 4, **characterised in that** two respective double-disc wheels (16, 17) are actuated via a displacement carriage (26).

6. Apparatus according to claims 1 to 5, **characterised in that**, in order to cover the entire surface, sensors for controlling the stators (25) are so disposed between the tracks (10) that there is always one sensor situated beneath the transporting carriage (12).

7. Apparatus according to claims 1 to 6, **characterised in that** the transporting carriage (12) comprises an upper carriage (13) and a undercarriage (14) provided with damping elements (32).

## Revendications

1. Système de transport de containers comprenant des rails sur des pistes de circulation , un moteur linéaire et des roues rotatives , avec un système de pistes de circulation (10) disposées de manière perpendiculaire en angle droit et parallèles l'une par rapport à l'autre et dotées de rails (5) formant des points de croisement (9) ; les rails (5) n'étant disposés qu'à l'extérieur des points de croisement (9), ledit système comprenant des chariots de transport (12) pourvus de roues (15) qui tournent autour d'un tourillon (22) dotées de rouleaux de guidage (36); la distance entre les roues (15) correspondant à celle entre les rails (5) et les roues (15) étant susceptibles de tourner avec les rouleaux de guidage (36) dans les points de croisement (9) en direction longitudinale et transversale ; des aimants (33) disposés sur les chariots de transport (12) bougeant lesdites chariots de transport (12) à l'aide de stators (8, 28) de la piste de circulation (10) en direction longitudinale et transversale et un système de tiges (27) et levier articulé (28) doté d'un chariot de déplacement (26) pour tourner les roues (15) avec les rouleaux de guidage (36) horizontaux, **caractérisé en ce que** les roues (16, 17) sont réalisées sur les chariots de transport (12) en tant que roues à double disque (16, 17)

2. Dispositif selon la revendication 1, **caractérisé en ce que** les roues réalisées en tant que roues à double disque sont réalisées de manière à ce que leurs surfaces de circulation (18) moyennes roulent sur les rails (5) et leurs autres surfaces de circulation (19, 20) roulent sur les points de croisement (9).

3. Dispositif selon la revendication 1 ou 2, **caractérisé en ce que** des stators (25) sont disposés de manière parallèle aux pistes de circulation (10) pour les chariots de déplacement (26).

4. Dispositif selon les revendications 1 à 3, **caractérisé en ce que** seuls des rouleaux de guidage (36) horizontaux sont disposés autour des trois roues (15, 16, 17) qui sont guidées dans des guidages (11).

5. Dispositif selon une ou plusieurs des revendications 1 à 4, **caractérisé en ce que** deux roues à double disque (16, 17) sont actionnées à chaque fois par un chariot de déplacement .

6. Dispositif selon les revendications 1 à 5, **caractérisé en ce que** des capteurs sont disposés pour recouvrir les surfaces entre les pistes de circulation (10) afin de commander les stators (25) de manière à ce qu'un capteur se trouve toujours sous le chariot de transport (12).

7. Dispositif selon les revendications 1 à 6, **caractérisé en ce que** le chariot de transport (12) est composé d'un chariot supérieur (13) et un chariot inférieur (14) avec des éléments d'amortissement (32).
